# EUROPÄISCHE PATENTANMELDUNG

(11) **EP 1 728 582 A1**
(43) Veröffentlichungstag der Anmeldung: **06.12.2006**
(21) Anmeldenummer: 05011662.3
(22) Anmeldetag: 31.05.2005
(51) Int. Cl.: B23K 26/06, B23K 26/42

(54) **Einrichtung zur Erfassung von Veränderungen eines Laserstrahls**

(71) Anmelder: Trumpf Laser- und Systemtechnik GmbH, 71254 Ditzingen (DE)
(72) Erfinder: Weller, Roland, 70839 Gerlingen (DE); Kaupp, Peter, 71069 Sindelfingen (DE); Lehleuter, Franz, 70825 Korntal-Münchingen (DE)
(74) Vertreter: Bäcker, Rüdiger

(57) **Zusammenfassung**

Eine Einrichtung (1) ist zur Erfassung von Veränderungen eines Laserstrahls (4) innerhalb einer Laserbearbeitungsmaschine zwischen einem Auskoppelspiegel (8) des Lasers (9) und einem adaptiven Spiegel (2) des Laserbearbeitungskopfs (1) vorgesehen. Ein Sensor (6) zur Erfassung von Laserstrahlveränderungen ist vor dem Laserbearbeitungskopf (1) angeordnet. Weiterhin ist eine Daten des Sensors (6) erfassende und auswertende sowie den adaptiven Spiegel (2) ansteuernde Steuerung (7) vorgesehen.

## Beschreibung

Die Erfindung betrifft eine Einrichtung zur Erfassung von Veränderungen eines Laserstrahls innerhalb einer Laserbearbeitungsmaschine zwischen einem Auskoppelspiegel des Lasers und einem adaptiven Spiegel des Laserbearbeitungskopfs.

Aufgrund thermischer Belastung oder Verschmutzung des Auskoppelspiegels während der Laserbearbeitung kann sich der Durchmesser des Laserstrahls ändern.

Durch die US 6528762 ist eine Vorrichtung zur Kontrolle der Position des Laserstrahls mithilfe eines Laserstrahlpositionssensors bekannt geworden.

Die EP1310782 zeigt eine Vorrichtung zur Erfassung des Zustandes eines optischen Elements und die Einbindung in einen Online-Mess-und Auswerte-Prozess.

Der Anmelder hat sich die Aufgabe gestellt, Veränderung des Durchmessers des Laserstrahls zwischen dem Auskoppelspiegel des Lasers und dem Bearbeitungskopf der Laserbearbeitungsmaschine zu kompensieren.

Diese Aufgabe wird durch eine Einrichtung zur Erfassung von Veränderungen eines Laserstrahls innerhalb einer Laserbearbeitungsmaschine zwischen einem Auskoppelspiegel des Lasers und einem adaptiven Spiegel des Laserbearbeitungskopfs gelöst, wobei ein Sensor zur Erfassung von Laserstrahlveränderungen vor dem Laserbearbeitungskopf angeordnet ist, und eine Daten des Sensors erfassende und auswertende sowie den adaptiven Spiegel ansteuernde Steuerung vorgesehen ist. Mithilfe der erfindungsgemäßen Einrichtung können Veränderungen des Laserstrahls vor dem Bearbeitungskopf erkannt und durch Veränderung der adaptiven Spiegeleigenschaften korrigiert werden.

Die Steuerung ist vorteilhafterweise zur Anpassung der Prozessparameter der Laserbearbeitung, wie Brennweite und Strahldurchmesser, und/oder zur Kompensation von Änderungen des Auskoppelspiegels ausgebildet.

Wenn der adaptive Spiegel möglichst unmittelbar vor dem Auskoppelspiegel angeordnet ist, können große Durchmesserveränderungen des Laserstrahls erreicht werden.

Wenn eine Überwachungseinrichtung für den Auskoppelspiegel vorgesehen ist, können Ursachen für Änderungen von Laserstrahleigenschaften frühzeitig erkannt werden.

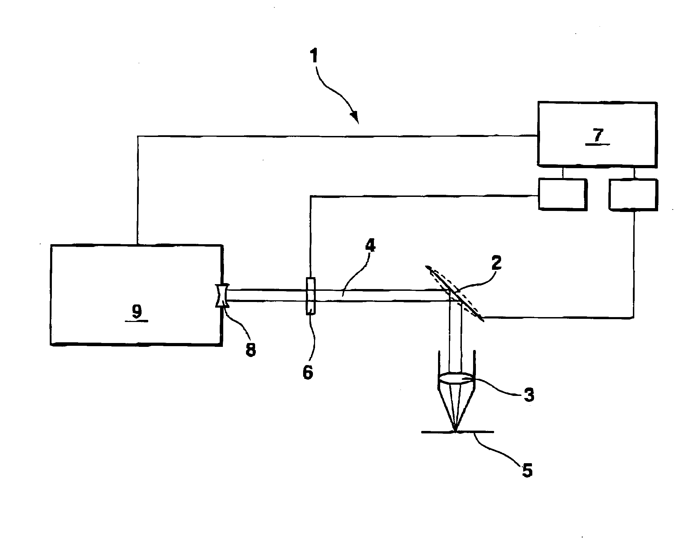

Ein Ausführungsbeispiel der Erfindung ist in der Zeichnung schematisch dargestellt und wird nachfolgend mit Bezug zu den Figuren der Zeichnung näher erläutert. Die Figur zeigt einen Laserbearbeitungskopf im Längsschnitt.

Aus der **Figur** ist der Aufbau eines Laserbearbeitungskopfs **1** ersichtlich, welcher einen adaptiven Spiegel **2** mit sphärisch deformierbarer Spiegeloberfläche und einen Fokussierspiegel **3** zur Fokussierung eines Laserstrahls **4** auf ein Werkstück **5** umfasst.

Durch eine In-Process-Messung des Laserstrahls **4** vor der Bearbeitungsstelle können die Prozessparameter (beispielsweise die Rohstrahldurchmesseränderung) über den Spiegel 2 angepasst werden bzw. die Veränderung eines Auskoppelspiegels **8** (Verschleiß, Alterung, Verunreinigung, etc.) des Lasers **9** kann kompensiert werden.

Ein Sensor oder Messgerät **6,** z. B. ein an sich bekannter und hier nicht näher beschriebener BeamScanner der Fa. Primes oder ein Laserscope UFC 80 der Fa. Prometec, wird direkt vor dem Bearbeitungskopf 1 in eine Lasermaschine integriert. Mit den in-process ermittelten Daten wird der adaptive Spiegel 2, entsprechend vorgegebener Daten, verstellt. Der Spiegel 2 sollte so nahe wie möglich am Auskoppelspiegel des Lasers angebaut werden, um eine entsprechend große Durchmesseränderung bis zur Bearbeitungsstelle erreichen zu können. Eine Steuerung oder Regelung des Spiegels 2 kann durch eine Maschinensteuerung, einen PC oder manuell erfolgen. Im gezeigten Ausführungsbeispiel ist eine Steuereinheit **7** vorgesehen, welche Messwerte des Laserstrahls 4 erfasst und mit Sollwerten vergleicht. Die Sollwerte können über eine Maschinensteuerung, einen PC oder manuell eingegeben werden. Hierdurch kann eine Anpassung der Prozessparameter, wie beispielsweise Variation der Brennweite des Rohlaserstrahls, bei Laseranwendungen erreicht werden. Dadurch können die Prozessparameter der Laseranwendung angepasst werden. Eine Kompensation von Veränderungen des Auskoppelspiegels des Lasers durch Alterung, Verschmutzung, Verunreinigung oder Verschleiß kann erzielt werden. Ändert der Auskoppelspiegel über die Zeit sein Verhalten, sodass eine Durchmesseränderung des Rohstrahls eintritt, kann dieser Änderung gegengesteuert werden. Aufgrund der ermittelten Daten des Sensors oder Messgeräts kann der Rohstrahl entsprechend nun korrigiert werden. Der Vorteil besteht darin, einen möglichen Serviceeinsatz gezielt zu verzögern und bei Erreichen vorgegebener Grenzwerte (Strahldurchmesser) einen erforderlichen Serviceeinsatz rechtzeitig anzuzeigen und geplant durchzuführen. Um eine Zerstörung des Auskoppelspiegels zu vermeiden (Überkompensation der Veränderung des Auskoppelspiegels), muss der Auskoppelspiegel mit einer Auskoppelspiegelüberwachung ausgestattet werden, wie sie beispielsweise in der EP 1398612 A1 beschrieben ist.

Der adaptive Spiegel 2 kann über (Kühlwasser-) Druck oder auch mit Piezoelementen verstellt werden. Die fokussierende Optik 6 kann eine Linsen- oder Spiegeloptik sein.

### BEZUGSZEICHENLISTE

- 1: Laserbearbeitungskopf
- 2: Adaptiver Spiegel
- 3: Fokussierspiegel
- 4: Laserstrahl
- 5: Werkstück
- 6: Sensor
- 7: Steuerung
- 8: Auskoppelspiegel
- 9: Laser

## Patentansprüche

1. Einrichtung (1) zur Erfassung von Veränderungen eines Laserstrahls (4) innerhalb einer Laserbearbeitungsmaschine zwischen einem Auskoppelspiegel (8) des Lasers (9) und einem adaptiven Spiegel (2) des Laserbearbeitungskopfs (1), **dadurch gekennzeichnet, dass** ein Sensor (6) zur Erfassung von Laserstrahlveränderungen vor dem Laserbearbeitungskopf (1) angeordnet ist, und eine Daten des Sensors (6) erfassende und auswertende sowie den adaptiven Spiegel (2) ansteuernde Steuerung (7) vorgesehen ist.

2. Einrichtung nach Anspruch 1, **dadurch gekennzeichnet, dass** der adaptive Spiegel (2) vor dem Auskoppelspiegel (8) angeordnet ist.

3. Einrichtung nach Anspruch 1 oder 2, **dadurch gekennzeichnet, dass** die Steuerung (7) zur Anpassung der Prozessparameter der Laserbearbeitung wie Brennweite und Strahldurchmesser ausgebildet ist.

4. Einrichtung nach Anspruch 1 oder 2, **dadurch gekennzeichnet, dass** die Steuerung (7) zur Kompensation von Änderungen des Auskoppelspiegels (8) ausgebildet ist.

5. Einrichtung nach Anspruch 4, **dadurch gekennzeichnet, dass** eine Überwachungseinrichtung für den Auskoppelspiegel (8) vorgesehen ist.
